## Europäisches Patentamt
## European Patent Office
## Office européen des brevets

(19)

(11) Veröffentlichungsnummer: **0 029 471**
A1

(12)                **EUROPÄISCHE PATENTANMELDUNG**

(21) Anmeldenummer: **79200796.5**

(22) Anmeldetag: **21.12.79**

(51) Int. Cl.³: **F 16 C 33/14**
    **C 25 D 3/20**

(30) Priorität: **27.11.79 CH 10511/79**

(43) Veröffentlichungstag der Anmeldung:
**03.06.81 Patentblatt 81/22**

(84) Benannte Vertragsstaaten:
**AT BE CH DE FR GB IT LU NL SE**

(71) Anmelder: **BBC Brown, Boveri & Cie.**
**(Aktiengesellschaft)**

**CH-5401 Baden(CH)**

(72) Erfinder: **Faber, Guy, Dipl.-Ing.**
**Buacher 11**
**CH-5452 Oberrohrdorf(CH)**

(72) Erfinder: **Maggi, Carlo**
**Langacker**
**CH-5400 Baden 5 Dättwil(CH)**

(54) **Verfahren zur Herstellung eines Lagerkörpers für ein Gleitlager hoher Wärmeleitfähigkeit und Lagerkörper.**

(57) Lagerschalen und Segmente für Gleitlager auf Weissmetallbasis hoher Wärmeleitfähigkeit werden dadurch hergestellt, dass der aus Kupfer oder einer Kupferlegierung bestehende Grundkörper (2) zunächst elektrolytisch mit einer dünnen Eisenzwischenschicht (3) versehen wird, auf welche dann
der Weissmetall-Ausguss (4) als Deckschicht (Lauffläche)
aufgebracht wird.

FIG.1

EP 0 029 471 A1

- 1 -

Verfahren zur Herstellung eines Lagerkörpers für ein Gleitlager hoher Wärmeleitfähigkeit und Lagerkörper

Die Erfindung geht aus von einem Verfahren zur Herstellung
eines Lagerkörpers nach der Gattung des Anspruchs 1 und
von einem Lagerkörper nach der Gattung des Anspruchs 2.

Lagerkörper (meist Lagerschalen) für Gleitlager wurden
bisher meistens entweder aus einer Kupferlegierung (z.B.
Bronze) oder aus Stahl oder Gusseisen gefertigt, auf welche dann eine Schicht Zinn-Weissmetall (meist Sn/Pb/Sb-Legierung) in der Regel durch Ausgiessen aufgebracht wurde.
Derartige Verfahren sowie die danach hergestellten Erzeugnisse sind aus der Literatur hinlänglich bekannt
(z.B. Czochralski, Lagermetalle und ihre technologische
Bewertung, Springer Berlin, 1920; W. Hilgers, Abhängigkeit
der Lagerwerkstoffeigenschaften in Verbundlagern von der
Stützkörperkonstruktion, VDI-Berichte Nr. 248, 1975, S. 149-
158; H. Loewié, Aus der Praxis der Gleitlagerfertigung,
Goldschmidt informiert 2/70, Nr. 11, S. 25 - 26; W. Hilgers,
Verbesserung der Bindungsfestigkeit von Stützkörpern aus
Gusseisen mit Lagerwerkstoffen, Goldschmidt informiert 3/74,
Nr. 30, S. 4 - 5).

- 2 -

Bei niedrigen Belastungen und vergleichsweise niedrigen Temperaturen haben sich derartige herkömmliche Lagerkörper im allgemeinen gut bewährt. Die Haftung zwischen Bronze und Zinn-Weissmetall ist ausgezeichnet, diejenige zwischen Eisenlegierungen und Zinn-Weissmetall in der Regel gut. Bei höchsten Belastungen und demzufolge höheren Temperaturen (120 ° C und mehr) hat jedoch die Kombination Kupferlegierung/Zinn-Weissmetall die unangenehme Eigenschaft, dass die in der Uebergangszone für die Haftung und Bindung verantwortliche Schicht spröder und harter intermetallischer Verbindungen in der Dicke zufolge erhöhter Diffusion zunimmt und daher der Verband durch Rissbildung und Abblättern gefährdet ist. Andererseits sind Lagerschalen aus Eisenlegierungen (Stahl, Gusseisen) vergleichsweise schlechte Wärmeleiter, so dass der Belastung von der Temperaturseite des Zinn-Weissmetalles her bald Grenzen gesetzt sind (hoher Temperaturgradient Weissmetalloberfläche/ Stützkörperoberfläche).

Der Erfindung liegt die Aufgabe zugrunde, ein einfaches Verfahren zur Herstellung eines Lagerkörpers auf der Basis von Weissmetall anzugeben, welches bei hoher Wärmeleitfähigkeit und demzufolge hoher Belastbarkeit die für Zinnweissmetall höchstzulässigen Betriebstemperaturen auszunutzen gestattet und dank guter Bindung zwischen Lagerwerkstoff und Stützkörpermaterial eine lange Lebensdauer und hohe Betriebssicherheit gewährleistet.

Diese Aufgabe wird erfindungsgemäss durch die Merkmale des Anspruchs 1 gelöst.

- 3 -

Die Erfindung wird anhand der nachfolgenden, durch Figuren erläuterten Ausführungsbeispiele beschrieben.

Dabei zeigt:

Fig. 1   eine perspektivische Darstellung eines Lagerkörpers für eine Radiallager-Halbschale,

Fig. 2   eine perspektivische Darstellung eines Lagerkörpers für ein Axiallager-Kreissegment,

Fig. 3   einen schematischen Schnitt durch die Schichtfolge eines Lagerkörpers.

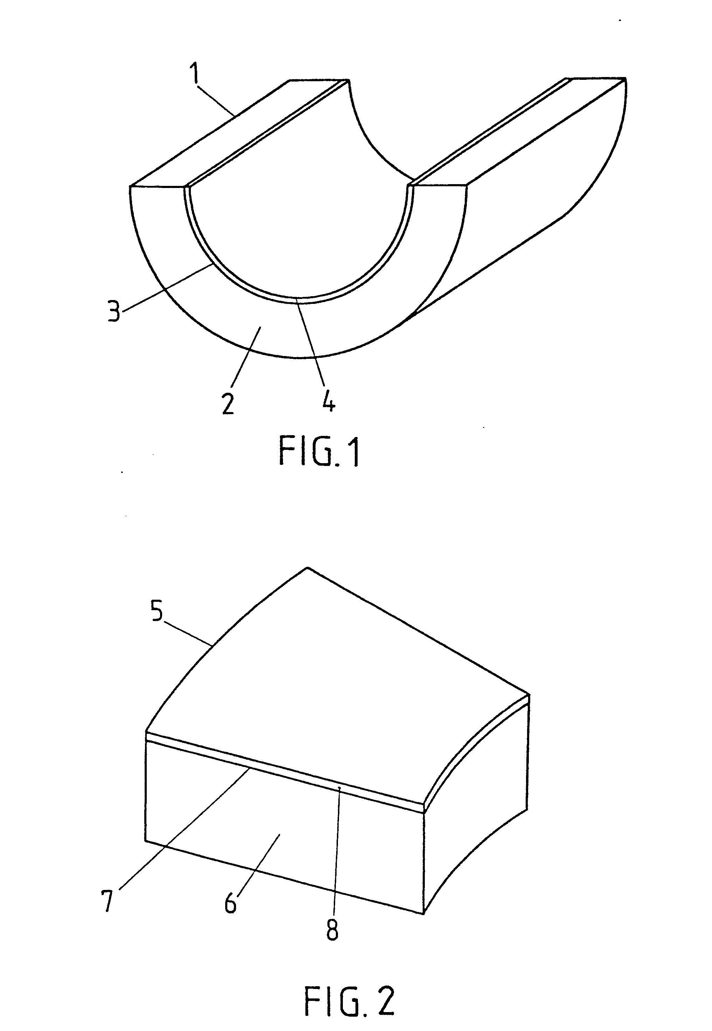

In Fig. 1 ist ein Lagerkörper für eine Radiallager-Halbschale perspektivisch dargestellt. Der eine Radiallager-Halbschale 1 bildende Lagerkörper setzt sich aus einem Kupfermantel 2 als Grundkörper (Stützkörper), einer zylindrischen Eisen-Zwischenschicht 3 und einem ebenfalls zylindrischen Weissmetall-Ausguss 4 als Deckschicht zusammen, welcher die eigentliche, der Welle zugekehrte Lauffläche bildet. Die Eisen-Zwischenschicht 3 weist je nach Lagergrösse in der Regel eine Dicke von 15 bis 150 $\mu$ auf, während der Weissmetall-Ausguss 4 im allgemeinen mehrere mm dick gewählt wird. Die Zwischenschicht 3 kann auch aus einer Folge einer Lage Nickel und einer Lage Eisen bestehen, wobei das letztere auf der Seite des Weissmetall-Ausgusses 4 liegt. Weiterhin kann das Reinkupfer des Mantels 2 durch eine Kupferlegierung mit Chrom- und/oder Zirkongehalt ersetzt sein.

- 4 -

Fig. 2 zeigt die perspektivische Darstellung eines Lagerkörpers für ein Segmentlager. Das Axiallager-Kreissegment 5
besteht aus einem Kupferblock 6 als Grundkörper (Stützkörper), einer ebenen Eisen-Zwischenschicht 7 und einem
ebenen Aufguss als Weissmetall-Deckschicht 8. Bezüglich
Dicke  der einzelnen Schichten und Variation der Werkstoffzusammensetzung wird auf den Text unter Fig. 1 verwiesen.

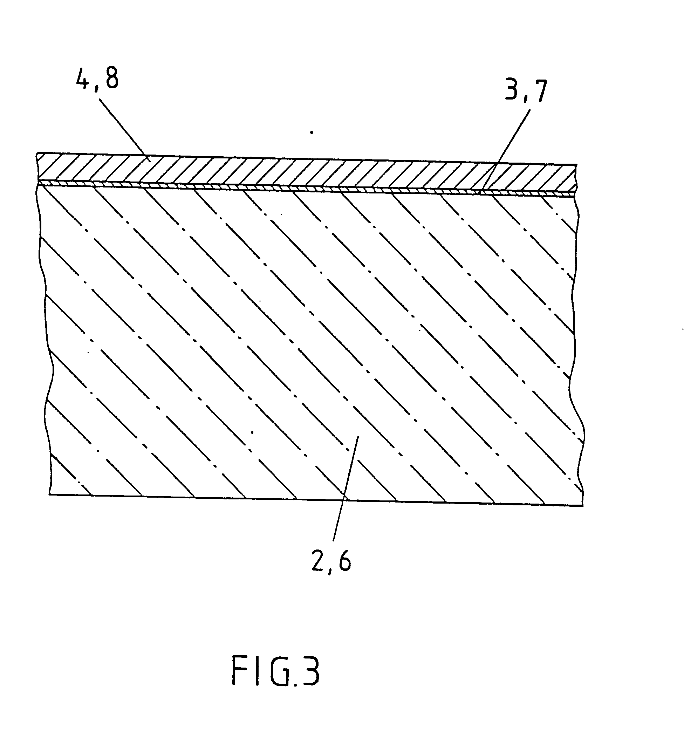

In Fig. 3 ist ein Schnitt durch die Schichtfolge eines
Lagerkörpers dargestellt. Der grundsätzliche Aufbau aus
Kupfer-Grundkörper (2; 6), Eisen-Zwischenschicht (3; 7) und
Weissmetall-Deckschicht (4; 8) als Lauffläche erklärt sich
von selbst.

Ausführungsbeispiel I:

Zur Herstellung der Lagerkörper eines aus zwei Halbschalen 1
bestehenden Radiallagers wurde wie folgt vorgegangen: Aus
einem Reinkupferbarren  einer hiefür geeigneten Vorform
(beispielsweise hohlzylindrischer Körper) wurden zwei
Halbschalen als Grundkörper 2 von je 120 mm Länge, 160 mm
Aussen- und 108 mm Innendurchmesser herausgedreht. Dabei
soll der Soll-Innendurchmesser der fertigen Lagerschale 100
mm betragen, was einer Weissmetallschicht von 4 mm radialer
Dicke entspricht. Die nicht  mit Weissmetallauflage zu versehenden Oberflächenteile des Grundkörpers 2 (Kupfermantel)
wurden mit einem geeigneten, den nachfolgenden Chemikalien
widerstehenden Lack abgedeckt, worauf die Innenfläche der
Bohrung mit einer Sodalösung bei einer Temperatur von 60°C
entfettet wurde. Anschliessend wurde die Kupferoberfläche

- 5 -

durch Eintauchen des Körpers während 5 Minuten in eine
15 %-ige Schwefelsäurelösung bei 60°C gebeizt und nachträglich mit Wasser abgespült. Das derart gereinigte Werkstück wurde hierauf sofort in ein Elektrolysebad zwecks
elektrolytischer Eisenabscheidung übergeführt. Das Bad wies
folgende Charaktristik auf:

$\qquad$ 300 g zweiwertiges Eisenammonium-Sulfat
$\qquad$ in 1 Liter Wasser
$\qquad$ $P_H$-Wert: 3,5
$\qquad$ Temperatur: 30°C
$\qquad$ Stromdichte an der Kathode: 15 A/dm$^2$

Nach ca. 1 h hatte sich eine auf der Oberfläche des Grundkörpers 2 fest haftende Zwischenschicht 3 aus reinem Eisen
in einer Dicke von 30 $\mu$ gebildet.

Das Eisenbad kann prinzipiell folgende Charakteristik
aufweisen:

$\qquad$ 300 - 330 g zweiwertiges Eisenammonium-
$\qquad$ Sulfat in 1 Liter Wasser
$\qquad$ $P_H$-Wert: 3,5 - 3,8
$\qquad$ Temperatur: 30 - 35°C
$\qquad$ Stromdichte an der Kathode: 15 - 25 A/dm$^2$

Die Eisenzwischenschicht 3 kann je nach Grösse des Objekts
eine Dicke von 15 bis 150 $\mu$ aufweisen.

Nach Fertigung der Zwischenschicht 3 wurde der Lagerkörper in
heissem Wasser abgespült, getrocknet und der Abdecklack ent-

- 6 -

fernt. Daraufhin wurden alle nicht zu verzinnenden Oberflächen mit Wasserglas abgedeckt. Selbstverständlich können hierzu auch die im Handel gängigen Mittel benutzt werden. Die zu verzinnende Oberfläche der Eisen- Zwischenschicht 3 wurde hierauf mit einer Lösung von Zinkchlorid in Wasser bestrichen. Es kann hierzu auch jedes marktgängige spezifische Lötwasser benutzt werden. Die Lagerschale wurde dann zum Verzinnen kurz in flüssiges Zinn getaucht und sofort mit der entsprechenden gleichbehandelten zweiten Halbschale zusammengebaut und nach dem Schleudergussverfahren in an sich bekannter Weise mit flüssigem Zinn-Weissmetall ausgegossen. Die radiale Dicke des Weissmetall-Ausgusses 4 betrug dabei 4 mm. Als Weissmetalle eignen sich vor allem die zinnreichen Typen. Im vorliegenden Fall stellte sich die Zusammensetzung wie folgt:

Sb: 12 Gew.-%

Cu: 6 Gew.-%

Pb: 2 Gew.-%

Sn: Rest

Im allgemeinen können mit Vorteil Weissmetalle auf Zinnbasis der nachfolgenden Zusammensetzung Verwendung finden:

Sb: 3 bis 12 Gew.-%

Cu: 1 bis 10 Gew.-%

Pb: max. 5 Gew.-%

Sn: Rest

Eine metallographische Prüfung ergab, dass die Zone der harten intermetallischen Verbindungen des Systems Fe/Sn

- 7 -

äusserst schmal war und sich auch nach längerer Erwärmung auf Betriebstemperatur (120 - 150°C) kaum veränderte, was auf die niedrige Diffusionsgeschwindigkeit hinweist. Der ausserdem durchgeführte Abdruckversuch ergab eine gute Haftfestigkeit der Zwischenschicht und der Weissmetall-Auflage. Der Bruch erfolgte durchwegs im Weissmetall selbst.

Ausführungsbeispiel II:

Zur Herstellung eines Lagerkörpers eines mit sechs Kreissegmenten 5 bestehenden hochbelasteten Axiallagers wurde aus einer geeigneten Platte ein segmentförmiges Werkstück als Grundkörper 6 aus einer Kupferlegierung mit 0,5 % Chrom und 0,1 % Zirkon herausgearbeitet. Diese Legierung wurde gewählt, weil sie gegenüber Reinkupfer unter Wahrung der hohen Wärmeleitfähigkeit eine erhöhte mechanische Festigkeit aufweist. Es muss hier darauf hingewiesen werden, dass der Grundkörper 6 selbstverständlich auch aus einer anderen Kupferlegierung hoher Leitfähigkeit wie beispielsweise Bronzen oder Sonderbronzen bestehen kann, wobei in der Regel der Kupfergehalt mindestens 70 % betragen muss. Der Grundkörper 6 entsprach in seinen Abmessungen einem Kreisring von 300 mm Innen- und 800 mm Aussendurchmesser, bei einer Stärke von 100 mm. Zusätzlich wurde der Grundkörper gemäss dem in Beispiel I angegebenen Verfahren gereinigt und anschliessend sogleich in einem speziellen Eisenbad elektrolytisch vorbehandelt. Dieser zusätzliche, der eigentlichen galvanischen Hauptbehandlung vorangehende Verfahrensschritt hat den Zweck, die Haftfestigkeit der Eisen-Zwischenschicht 7 in Anbetracht der Zusammensetzung des Grundkörpers 6 (Vorhandensein der Legierungselemente Chrom und Zirkon) zu

- 8 -

erhöhen. Das vorgeschaltete Eisenbad hatte folgende
Charakteristik:

250 g zweiwertiges Eisenammonium-Sulfat
in 1 Liter Wasser
$P_H$-Wert: 2,8
Temperatur: $25^{\circ}C$
Stromdichte an der Kathode 30 A/dm$^2$

Nach ca. 5 min dieser Vorbehandlung wurde das Werkstück
möglichst schnell und ohne Zwischenspülung in das unter
Beispiel I beschriebene Hauptbad überführt.

Das vorbereitende Eisenbad kann prinzipiell folgende
Charakteristik haben:

250 - 300 g zweiwertiges Eisenammonium-
Sulfat in 1 Liter Wasser
$P_H$-Wert: 2,8 - 3,2
Temperatur: 25 - $30^{\circ}C$
Stromdichte an der Kathode: 30 - 50 A/dm$^2$

Nach dem Aufbringen der galvanischen Eisen-Zwischenschicht 7
auf der mit Weissmetall zu bedeckenden ebenen Fläche des
Grundkörpers 6 wurde diese in herkömmlicher, unter Beispiel I
beschriebenen Weise verzinnt. Anschliessend wurde die Weissmetall-Deckschicht 8 im Standgussverfahren in einer Dicke
von 6 mm aufgebracht. Im übrigen entsprachen die Einzelheiten durchwegs den Charakteristiken in Beispiel I.

Durch das erfindungsgemässe Verfahren wird es möglich, bei

- 9 -

Gleitlagern auf der Basis von Zinn-Weissmetall durch wesentliche Verbesserung der Wärmeabfuhr über einen Grundkörper (Stützkörper) aus Kupfer oder einer Kupferlegierung gegenüber Eisenlegierungen (Stahl, Gusseisen) die Belastbarkeit zu erhöhen, ohne eine betriebsbedingte Versprödung und vorzeitige Rissbildung in der intermetallischen Bindungszone zwischen Weissmetall und Trägermetall in Kauf nehmen zu müssen. Dank der fest haftenden Eisen-Zwischenschicht zwischen Lagermetall und Stützkörper wird eine hohe Betriebssicherheit und lange Lebensdauer auch bei hohen Belastungen der Lager gewährleistet.

B e z e i c h n u n g s l i s t e

1  =  Radiallager-Halbschale

2  =  Kupfermantel als Grundkörper

3  =  Eisen-Zwischenschicht (zylindrisch)

4  =  Weissmetall-Ausguss als Deckschicht
      (zylindrisch)

5  =  Axiallager-Kreissegment

6  =  Kupferblock als Grundkörper

7  =  Eisen-Zwischenschicht (eben)

8  =  Weissmetall-Deckschicht (eben)

P a t e n t a n s p r ü c h e

1. Verfahren zur Herstellung eines Lagerkörpers für ein Gleitlager hoher Wärmeleitfähigkeit auf der Basis von Zinn-Weissmetall, dadurch gekennzeichnet, dass die der Welle zugekehrte Oberfläche eines Grundkörpers (2; 6) aus Kupfer oder einer Kupferlegierung zunächst gereinigt, dann elektrolytisch mit einer dünnen Zwischenschicht (3; 7) aus Eisen versehen und abschliessend durch Aus-, Ein- oder Aufgiessen mit einer Deckschicht (4; 8) aus Weissmetall abgedeckt wird.

2. Verfahren nach Anspruch 1, dadurch gekennzeichnet, dass der Grundkörper (2) aus Reinkupfer besteht und dass die Zwischenschicht (3) aus Eisen in einem Arbeitsgang unter Zuhilfenahme eines zweiwertiges Eisenammonium-Sulfat enthaltenden Eisenbades mit einem $P_H$-Wert von 3,5 - 3,8 bei einer Temperatur von 30 - 35°C und einer kathodischen Stromdichte von 15 - 25 A/dm$^2$ elektrolytisch aufgebracht wird.

3. Verfahren nach Anspruch 1, dadurch gekennzeichnet, dass der Grundkörper (6) aus einer Kupferlegierung mit 0,5 % Chrom und 0,1 % Zirkon besteht und dass die Zwischenschicht (7) aus Eisen in zwei Arbeitsgängen unter Zuhilfenahme von zwei verschiedenen, zweiwertiges Eisenammonium-Sulfat enthaltenden Eisenbädern unterschiedlicher Charakteristiken elektrolytisch aufgebracht
wird, derart, dass das erste Eisenbad einen $P_H$-Wert
von 2,8 - 3,2, eine Temperatur von 25 - 30°C und
eine kathodische Stromdichte von 30 - 50 A/dm$^2$ aufweist, während das zweite Eisenbad einen $P_H$-Wert von
3,5 - 3,8, eine Temperatur von 30 - 35°C und eine
kathodische Stromdichte von 15 - 25 A/dm$^2$ aufweist,
und dass der zu beschichtende Grundkörper (6) innert
kürzester Zeit und ohne Zwischenspülung vom ersten in
das zweite Bad übergeführt wird.

4. Lagerkörper für ein Gleitlager hoher Wärmeleitfähigkeit,
hergestellt nach dem Verfahren gemäss Anspruch 1, dadurch gekennzeichnet, dass er aus einem Grundkörper (2;
6) aus Kupfer oder einer Kupferlegierung mit mindestens
70 % Kupfer, einer dünnen Zwischenschicht (3; 7) aus Eisen und einer Deckschicht (4; 8) aus Weissmetall auf der
der Welle zugekehrten Seite besteht.

5. Lagerkörper nach Anspruch 4, dadurch gekennzeichnet, dass
die Zwischenschicht (3; 7) aus Eisen eine Dicke von
15 μ bis 150 μ aufweist.

6. Lagerkörper nach Anspruch 4, dadurch gekennzeichnet, dass
er in Form einer zylindrischen Radiallager-Halbschale (1)
oder eines Axiallager-Kreissegmentes (5) ausgebildet ist.

7. Lagerkörper nach Anspruch 4, dadurch gekennzeichnet, dass

- 3 -

der Grundkörper (2; 6) aus Kupfer besteht.

8. Lagerkörper nach Anspruch 4, dadurch gekennzeichnet, dass der Grundkörper (2; 6) aus einer Kupferlegierung mit 0,5 % Chrom und 0,1 % Zirkon besteht.

9. Lagerkörper nach Anspruch 4, dadurch gekennzeichnet, dass die Deckschicht (4; 8) aus Weissmetall mit 3 bis 6 Gew.-% Antimon, 1 bis 10 Gew.-% Kupfer, max. 5 Gew.-% Blei, Rest Zinn besteht.

0029471

FIG.1

FIG.2

141/79

4,8

3,7

2,6

FIG.3

| **EINSCHLÄGIGE DOKUMENTE** | | | **KLASSIFIKATION DER ANMELDUNG (Int. Cl.³)** |
|---|---|---|---|
| Kategorie | Kennzeichnung des Dokuments mit Angabe, soweit erforderlich, der maßgeblichen Teile | betrifft Anspruch | |
| | DE - C - 830 269 (CLEVELAND GRAPHITE BRONZE CO.) <br> * Ansprüche 1, 2, 4, 7, 9; Fig. * <br> -- | 1,2,4, 6,7,9 | F 16 C 33/14 <br><br> C 25 D 3/20 |
| | DE - C - 844 664 (CLEVELAND GRAPHITE BRONZE CO.) <br> * Anspruch 1; Fig. 3 * <br> -- | 4,9 | |
| | DE - C - 1 048 755 (H. VAN DER HORST et al.) <br> * Ansprüche 1, 8, 9, 11 * <br> -- | 2,3 | **RECHERCHIERTE SACHGEBIETE (Int. Cl.³)** |
| | DE - B - 1 052 694 (T. GOLDSCHMIDT AG) <br> * Anspruch 1 * <br> -- | 9 | C 25 D 3/00 <br><br> F 16 C 33/00 |
| | DE - A1 - 2 509 109 (MIBA GLEITLAGER AG) <br> * Anspruch 1; Seite 2, Zeilen 1 bis 20; Fig. 1 * <br> -- | 4,6 | |
| | FR - A - 1 237 803 (ASSOCIATION DES OU-VRIERS EN INSTRUMENTS DE PRECISION) <br> * Ansprüche 1, 4, 6 * <br> -- | 2,3 | **KATEGORIE DER GENANNTEN DOKUMENTE** |
| A,D | J. CZOCHRALSKI et al. "Lagermetalle und ihre technologische Bewertung" 1920, VERLAG VON JULIUS SPRINGER, Berlin Seiten 28 bis 31 <br> -- ./.. | | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

X Der vorliegende Recherchenbericht wurde für alle Patentansprüche erstellt.

| Recherchenort | Abschlußdatum der Recherche | Prüfer |
|---|---|---|
| Berlin | 06-02-1981 | MASSALSKI |

EPA form 1503.1 08.78

Europäisches
Patentamt

**EUROPÄISCHER RECHERCHENBERICHT**

Nummer der Anmeldung

EP 79 20 0796.5
- Seite 2 -

| | EINSCHLÄGIGE DOKUMENTE | | KLASSIFIKATION DER ANMELDUNG (Int. Cl.³) · |
|---|---|---|---|
| Kategorie | Kennzeichnung des Dokuments mit Angabe, soweit erforderlich, der maßgeblichen Teile | betrifft Anspruch | |
| A,D | GOLDSCHMIDT INFORMIERT, 2/70, Nr. 11, Essen H. LOEWIE "Aus der Praxis der Gleit-lagerfertigung" Seiten 25 und 26 -- | | |
| A,D | GOLDSCHMIDT INFORMIERT, 3/74, Nr. 30 Essen W. HILGERS "Verbesserung der Bindungs-festigkeit von Stützkörpern aus Gußeisen mit Lagerwerkstoffen" Seiten 4 und 5 * -- | | **RECHERCHIERTE SACHGEBIETE (Int. Cl.³)** |
| A,D | VDI-BERICHTE, Nr. 248, 1975, Düsseldorf W. HILGERS "Abhängigkeit der Lager-werkstoffeigenschaften in Verbundlagern von der Stützkörperkonstruktion" Seiten 149 bis 158 ---- | | |